# FASCICULE DE BREVET EUROPEEN

(11) **EP 1 909 015 B1**
(45) Date de publication et mention de la délivrance du brevet: **19.03.2014**
(21) Numéro de dépôt: 07019246.3
(22) Date de dépôt: 01.10.2007
(51) Int. Cl.: F16L 33/22

(54) **Raccord pour le raccodement de tuyaux souples**
Anschlussstück zum Anschließen von Schläuchen
Joint for connecting flexible pipes

(30) Priorité: 02.10.2006 FR 0608624
(43) Date de publication de la demande: 09.04.2008
(73) Titulaire: Elyssa, 72000 Le Mans (FR)
(72) Inventeur: Constans, Yann, 72650 La Milesse (FR)
(74) Mandataire: Maillet, Alain

(56) Documents cités:
- WO-A-00/17561
- WO-A-98/45639
- DE-A1- 10 040 718
- GB-A- 2 096 261
- GB-A- 2 356 231
- US-A- 2 479 499
- US-A- 5 031 301
- US-A1- 2004 245 776

## Description

La présente invention concerne un raccord pour tuyaux souples fabriqués, par exemple, en matière plastique. Un tel raccord est fréquemment utilisé dans le bâtiment, l'industrie.

Pour raccorder convenablement un tuyau sur un raccord, il est nécessaire d'obtenir à la fois un accrochage suffisant du tuyau dans le raccord et la meilleure étanchéité possible entre ce tuyau et le raccord au regard de la pression du fluide circulant ou régnant dans ledit tuyau.

On utilise ainsi fréquemment un raccord pourvu, d'une part, d'un organe d'accrochage métallique pour tenir la paroi extérieure d'un tuyau et d'autre part, d'un joint d'étanchéité épousant ladite paroi extérieure du tuyau. La fabrication d'un tel raccord est assez coûteuse, puisqu'il faut monter l'organe d'accrochage et le joint d'étanchéité dans le raccord à l'issue de sa fabrication.

On connaît encore à la lecture du document WO-A-98/45639, un raccord pour tuyaux souples. Le raccord comprend un embout et un manchon apte à serrer l'extrémité d'un tuyau sur embout. Le corps de l'embout comporte un filetage pour le montage du manchon, une paroi cylindrique pourvue extérieurement de bourrelets se touchant et présentant une section bosselée. Un joint est logé dans la partie arrière

de la paroi cylindrique du manchon pour procurer un raccordement étanche sur la paroi extérieure du tuyau.

La présente invention propose un raccord d'une construction simplifiée peu couteaux à fabriquer palliant ainsi aux inconvénients des raccords précités.

A cet effet, est proposé un raccord pour le raccordement de tuyaux souples, comprenant un corps pourvu d'un filetage prolongé par une portion cylindrique destinée à être introduite dans une extrémité d'un tuyau, un manchon pourvu d'un taraudage prévu pour coopérer avec le filetage, le manchon étant pourvu d'un logement cylindrique et lisse disposé dans le prolongement du taraudage. Des bourrelets annulaires sont disposés autour de la portion cylindrique et qui sont aptes à serrer la paroi de l'extrémité du tuyau contre le logement cylindrique et lisse pour le retenir dans le raccord en procurant une étanchéité entre ledit tuyau et le corps à l'issue du montage du manchon sur le corps, chaque bourrelet annulaire présente une section radiale de forme semi circulaire. Selon l'invention, les bourrelets sont espacés à intervalles réguliers pour délimiter une distance minimum entre deux bourrelets voisins afin de préserver une bonne tenue à l'arrachement du tuyau.

On obtient ainsi un raccord constitué de seulement deux composants. Le maintien de l'extrémité du tuyau et son étanchéité sont réalisés par des composants statiques du raccord. Aucun joint additionnel n'est nécessaire pour l'obtention d'une étanchéité du tuyau avec le corps du raccord. Le raccordement du tube au raccord est réalisé avec une simple clé.

Cette forme du bourrelet évite de rayer la paroi interne du tuyau afin de préserver une bonne tenue à l'étanchéité du tuyau vis-à-vis du corps du raccord. Le raccord est réutilisable.

Selon une caractéristique additionnelle de l'invention, la portion cylindrique est pourvue de quatre bourrelets annulaires.

Selon une caractéristique additionnelle de l'invention, la longueur du logement cylindrique et lisse est égale ou légèrement supérieure à celle de la portion cylindrique.

Selon une caractéristique additionnelle de l'invention, la paroi extérieure du manchon est pourvue d'un moyen d'entraînement permettant le vissage ou le dévissage du manchon sur le corps.

Avantageusement, le moyen d'entraînement est constitué d'une portion de section hexagonale adaptée à coopérer avec une clé plate du commerce.

Selon une caractéristique additionnelle de l'invention, le corps est pourvu d'un moyen de raccordement sur un accessoire.

Avantageusement, le moyen de raccordement comprend une collerette prolongeant ledit filetage ainsi qu'un autre filetage prolongeant ladite collerette, la collerette étant dimensionnée de manière à recevoir un brasage de liaison avec la paroi de l'accessoire.

Selon une caractéristique additionnelle de l'invention, et dans une variante de réalisation du moyen de raccordement pour un autre tuyau, celui-ci comprend un épaulement prolongeant ledit filetage, l'épaulement étant prolongé par un second filetage qui est prolongé par une seconde portion cylindrique autour de laquelle sont disposés des bourrelets annulaires, un second manchon coopérant avec le second filetage pour tenir la paroi de l'extrémité d'un autre tuyau souple entre le logement cylindrique lisse et les bourrelets annulaires.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente une vue latérale éclatée des constituants d'un raccord selon l'invention,
la Fig. 2 représente une vue latérale d'une nourrice sur laquelle sont montés plusieurs raccords selon l'invention,
la Fig. 3 représente une vue latérale d'un raccord assemblé selon l'invention, et
la Fig. 4 représente une vue latérale d'une variante de réalisation d'un raccord assemblé selon l'invention.

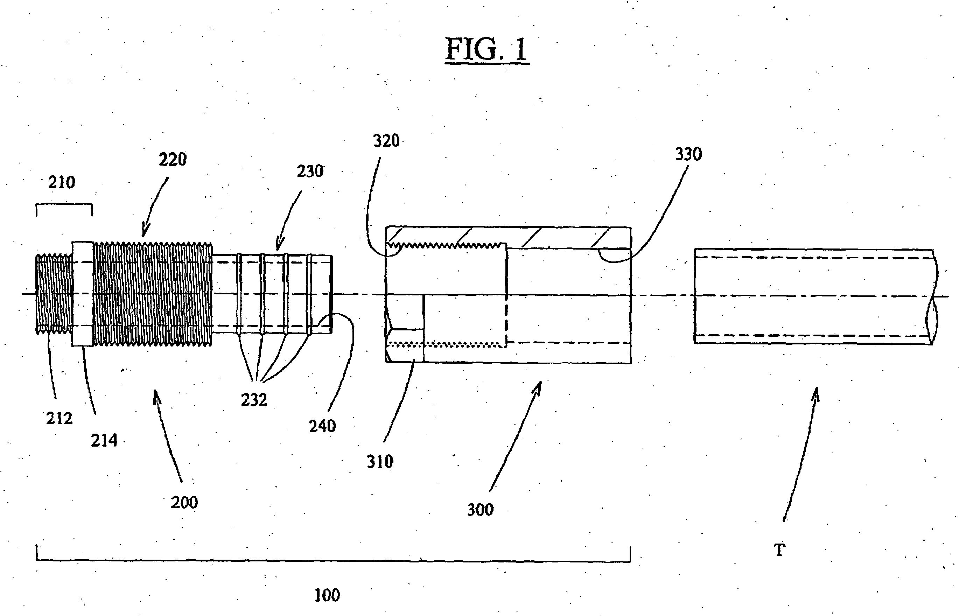

Le raccord 100, présenté sur la Fig. 1, comprend un corps 200 et un manchon 300 destinés à coopérer ensemble pour tenir un tuyau T souple sur le raccord et ceci en procurant une liaison étanche entre le tuyau et le corps du raccord. Les tuyaux souples susceptibles d'être raccordés sont, par exemple, des tuyaux fabriqués en polyéthylène réticulé.

Le corps 200 est constitué d'un élément monobloc comprenant un moyen de raccordement 210 sur un accessoire, un filetage de raccordement 220 pour permettre son assemblage avec le manchon 300, une portion cylindrique 230 destinée à être insérée à l'intérieur du tuyau T. Le corps est traversé longitudinalement par un passage 240 d'écoulement du fluide.

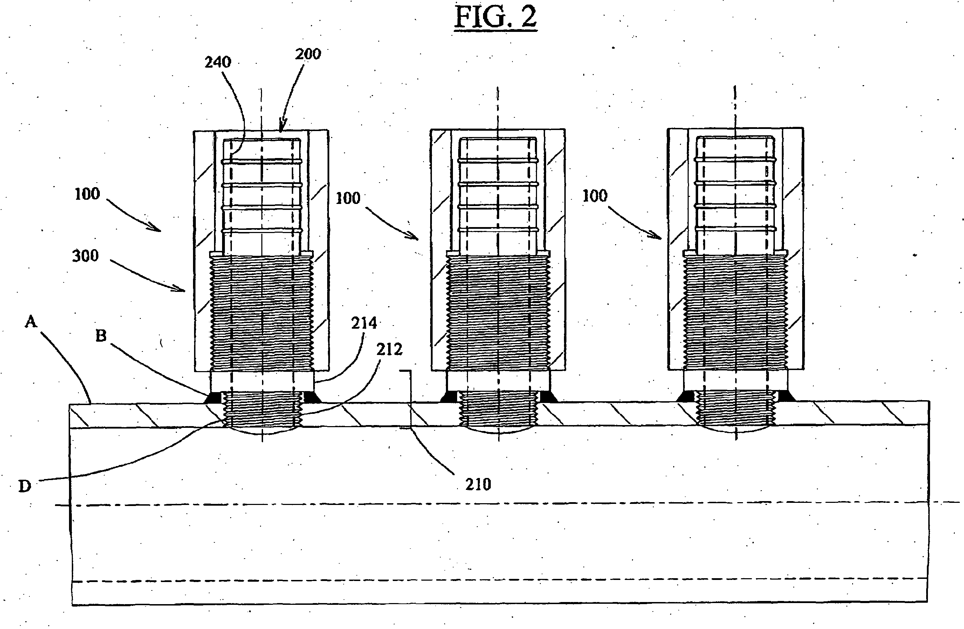

Le moyen de raccordement 210 est ici constitué d'un autre filetage 212 et d'une collerette 214. Le filetage 212 est destiné à coopérer avec un taraudage D d'un accessoire A comme cela est représenté à la Fig. 2 pour assembler par vissage le raccord 100 avec ledit accessoire. Celui-ci est, à cette Fig. 2, constitué d'une nourrice d'alimentation en fluide pour plusieurs raccords 100.

La collerette 214, sur laquelle est adossé le filetage 212 de chaque raccord 100, est destinée d'une part, à servir de butée de vissage du raccord 100 sur l'accessoire A et, d'autre part, à recevoir un brasage B de liaison avec la paroi de l'accessoire. La collerette 214 est dimensionnée en conséquence pour recevoir le brasage. Il peut s'agir d'un brasage de type à l'argent.

A la Fig. 1, le filetage 220 est adossé à la collerette 214, du côté opposé à l'autre filetage 212. Ce filetage 220 est destiné à coopérer avec un taraudage 320 dont est pourvu le manchon 300 pour permettre un assemblage mutuel de ces deux composants. La portion cylindrique 230 prolonge le filetage 220. Le diamètre de la portion cylindrique 230 est inférieur au diamètre du filetage 220 pour que ce dernier puisse servir de butée à l'avancement de l'extrémité du tuyau sur ladite portion cylindrique. Le diamètre de cette portion cylindrique 230 est aussi légèrement supérieur à celui du diamètre interne du tuyau T.

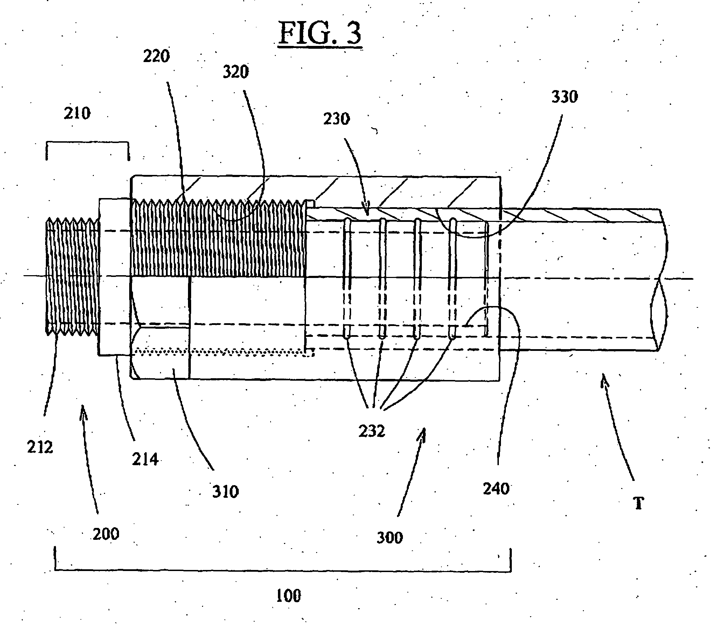

Le manchon 300 est constitué d'une pièce de révolution. Il est traversé longitudinalement et de part en part par le taraudage 320 évoqué ci-avant qui s'étend sur pratiquement la moitié de la longueur du manchon et par un logement cylindrique 330 qui est disposé dans le prolongement du taraudage 320. La paroi de ce logement cylindrique 330 est lisse, Il est destiné à épouser la paroi extérieure d'extrémité du tuyau T, sans la rayer aucunement. Le diamètre de ce logement cylindrique 330 est tel qu'il peut être enfilé manuellement sur ladite extrémité du tuyau. La longueur de ce logement cylindrique 330 est égale ou légèrement supérieure à celle de la portion cylindrique 230 afin que la paroi de l'extrémité du tuyau T puisse être tenue sur toute la longueur de la portion cylindrique comme cela apparaît à la Fig. 3. Le diamètre du logement cylindrique 330 est inférieur au diamètre du taraudage 320 pour que ce dernier ne puisse pas rayer le tuyau T lors de son introduction dans le manchon 300.

La paroi extérieure du manchon 300 est pourvue d'un moyen d'entraînement 310 permettant le vissage ou le dévissage du manchon 300 sur le corps 200. Ce moyen d'entraînement est constitué à cette Fig. 1 d'une portion de section hexagonale 310 adaptée à coopérer avec une clé plate du commerce. La portion de section hexagonale 310 est située de préférence au niveau d'une des extrémités du manchon 300.

On remarquera la présence de bourrelets annulaires 232 disposés autour de la portion cylindrique 230.

Ces bourrelets annulaires sont conçus pour pénétrer dans la paroi interne du tuyau T à l'issue du montage du tuyau sur la portion cylindrique 230 et du montage du manchon 300 sur le corps 200 pour, d'une part, retenir le tuyau dans le raccord 100 et, d'autre part, procurer une étanchéité entre le tuyau T et le corps 200 du raccord 100. Les bourrelets annulaires 232 coopèrent avec le logement cylindrique et lisse 330 pour serrer la paroi de l'extrémité du tuyau T au niveau desdits bourrelets.

Plusieurs bourrelets annulaires 232 sont utilisés plutôt qu'un seul de dimension plus importante pour obtenir un niveau d'étanchéité élevé. En effet, si une fuite subsiste au niveau du premier bourrelet, c'est-à-dire celui situé à l'extrémité du corps, l'étanchéité est reprise par le suivant etc. Cette pluralité de bourrelets facilite également le montage du tuyau sur la portion cylindrique 230 du corps 200. Quatre bourrelets annulaires 232 sont présents sur la portion cylindrique 230 du corps 200 à cette Fig. 1 pour l'obtention d'un niveau élevé d'étanchéité.

Chaque bourrelet annulaire 232 présente une section radiale de forme semi circulaire pour éviter de rayer la paroi interne du tuyau afin d'obtenir un niveau d'étanchéité élevé. Les bourrelets sont espacés à intervalles réguliers pour délimiter une distance minimum entre deux bourrelets voisins afin de préserver une bonne tenue à l'arrachement du tuyau T.

Le montage du raccord 100 est effectué de la manière suivante. On visse le corps 200 sur un accessoire A. On brase, le cas échéant, la collerette 214 du corps 200 sur l'accessoire A. A titre subsidiaire, on peut utiliser un filetage conique ou un joint pour procurer une étanchéité du raccord vis-à-vis de l'accessoire.

Le raccord 200 étant monté sur l'accessoire A, le raccordement du tuyau est réalisé de la manière suivante. On enfile le manchon 300 sur l'extrémité d'un tuyau T à raccorder, puis l'on introduit la portion cylindrique 230 dans l'extrémité du tuyau jusqu'à ce qu'elle vienne en butée contre le filetage 220. On fait coulisser ensuite le manchon en direction du corps 200, puis on visse ledit manchon 300 sur ledit corps à l'aide d'une clef.

La fabrication de ce raccord est économique puisque deux constituants seulement entrent dans sa composition. Par ailleurs, son assemblage est aisé car aucune opération supplémentaire de placement de joint ou d'une griffe d'accrochage n'est requise. Le montage d'un tuyau est réalisé à l'aide d'une simple clé plate. Il procure d'excellentes performances pour une utilisation en basse pression, de l'ordre d'une centaine de kPa.

Il convient pour des applications courantes telles que la réalisation de circuits de distribution domestique de l'eau, de collecte des eaux usées etc.). On peut extraire le tuyau du raccord et le remonter sans perte de tenue à l'étanchéité de la liaison.

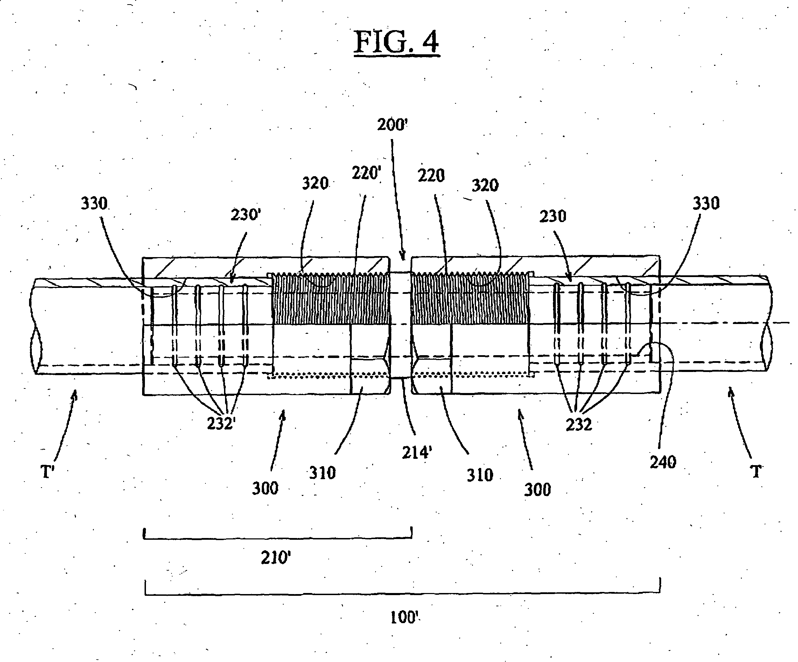

Dans une variante de réalisation représentée à la Fig. 4 et pour raccorder deux tuyaux T et T'entre eux, le moyen de raccordement 210' du corps 200' du raccord 100' est ici constitué d'un épaulement 214' et d'une partie identique à celle utilisée pour le raccordement d'un tuyau T, décrite ci-avant en remplacement du filetage 212 décrit en référence à la Fig. 1.

Le moyen de raccordement 2I0' comprend l'épaulement 214' prolongeant le filetage 220 et qui est prolongé par un second filetage 220' puis par une seconde portion cylindrique 230' autour de laquelle sont disposés des bourrelets annulaires 232'. Un second manchon 300 coopère avec le second filetage 220' pour tenir la paroi de l'extrémité d'un autre tuyau T' souple entre le logement cylindrique et lisse 330 du second manchon 300 et les bourrelets annulaires 232' du raccord 200' et ceci de manière étanche vis-à-vis dudit raccord.

Les dimensions du moyen de raccordement 210' et du second manchon 300 peuvent être adaptées pour le raccordement d'un tuyau T' de diamètre différent de celui du tuyau T.

## Revendications

1. Raccord (100 ; 100') pour le raccordement de tuyaux souples, comprenant un corps (200, 200') pourvu d'un filetage (220) prolongé par une portion cylindrique (230) destinée à être introduite dans une extrémité d'un tuyau (T), un manchon (300) pourvu d'un taraudage (320) prévu pour coopérer avec le filetage (220), le manchon (300) étant pourvu d'un logement cylindrique et lisse (330) disposé dans le prolongement du taraudage (320), des bourrelets annulaires (232) étant disposés autour de la portion cylindrique (230) et qui sont aptes à serrer la paroi de l'extrémité du tuyau (T) contre le logement cylindrique et lisse (330) pour le retenir dans le raccord (100, 100') en procurant une étanchéité entre ledit tuyau et le corps (200, 200') à l'issue du montage du manchon (300) sur le corps (200, 200'), chaque bourrelet annulaire (232) présentant une section radiale de forme semi-circulaire, **caractérisé en ce que** les bourrelets (232) sont espacés à intervalles réguliers pour délimiter une distance minimum entre deux bourrelets voisins afin de préserver une bonne tenue à l'arrachement du tuyau (T).

2. Raccord (100, 100') selon la revendication 1, **caractérisé en ce que** la portion cylindrique (230) est pourvue de quatre bourrelets annulaires (232).

3. Raccord (100, 100') selon l'une quelconque des revendications 1 ou 2, **caractérisé en ce que** la longueur du logement cylindrique et lisse (330) est égale ou légèrement supérieure à celle de la portion cylindrique (230).

4. Raccord (100, 100') selon l'une quelconque des revendications 1 à 3, **caractérisé en ce que** la paroi extérieure du manchon (300) est pourvue d'un moyen d'entraînement (310) permettant le vissage ou le dévissage du manchon (300) sur le corps (200, 200').

5. Raccord (100, 100') selon la revendication 4, **caractérisé en ce que** le moyen d'entraînement est constitué d'une portion de section hexagonale (310) adaptée à coopérer avec une clé plate du commerce.

6. Raccord (100) selon l'une quelconque des revendications 1 à 5, **caractérisé en ce que** le corps (200) est pourvu d'un moyen de raccordement (210) sur un accessoire (A).

7. Raccord (100) selon la revendication 6, **caractérisé en ce que** le moyen de raccordement (210) comprend une collerette (214) prolongeant le filetage (220) ainsi qu'un autre filetage (212) prolongeant ladite collerette (214), la collerette (214) étant dimensionnée de manière à recevoir un brasage (B) de liaison avec la paroi de l'accessoire (A).

8. Raccord (100') selon l'une quelconque des revendications 1 à 5, **caractérisé en ce que** le corps (200') est pourvu d'un moyen de raccordement (210') pour un autre tuyau (T'), le moyen de raccordement (210') comprenant un épaulement (214') prolongeant le filetage (220), l'épaulement (214') étant prolongé par un second filetage (220') qui est prolongé par une seconde portion cylindrique (230') autour de laquelle sont disposés des bourrelets annulaires (232'), un second manchon (300) coopérant avec le second filetage (220') pour tenir la paroi de l'extrémité d'un autre tuyau (T') souple entre le logement cylindrique lisse (330) et les bourrelets annulaires (232').

## Patentansprüche

1. Anschlussstück (100; 100`) zum Anschließen von weichen Schläuchen mit einem Körper (200, 200'), der mit einem Gewinde (220) versehen ist, welches durch einen zylindrischen Abschnitt (230) verlängert ist, der dazu bestimmt ist, in ein Ende eines Schlauches (T) eingeführt zu werden, einer Muffe (300), die mit einem Innengewinde (320) versehen ist, welches dafür vorgesehen ist, mit dem Gewinde (220) zusammenzuwirken, wobei die Muffe (300) mit einem zylindrischen und glatten Lager (330) versehen ist, welches in der Verlängerung des Innengewindes (320) angeordnet ist, mit ringförmigen Wülsten (232), die um den zylindrischen Abschnitt (230) herum angeordnet sind und die dafür geeignet sind, die Wand des Endes des Schlauches (T) gegen das zylindrische und glatte Lager (330) zusammenzudrücken, um sie in dem Anschlussstück (100, 100') zu halten und eine Abdichtung zwischen dem Schlauch und dem Körper (200, 200') im Falle der Montage der Muffe (300) auf dem Körper (200, 200') zur Verfügung zu stellen, wobei jeder ringförmige Wulst (232) einen radialen Querschnitt mit Halbkreisform aufweist, **dadurch gekennzeichnet, dass** die Wülste (232) mit regelmäßigen Abständen beabstandet sind, um einen minimalen Abstand zwischen zwei benachbarten Wulsten zu begrenzen, um eine gute Widerstandsfähigkeit gegen das Herausreißen des Schlauches (T) zu bewahren.

2. Anschlussstück (100, 100') nach Anspruch 1, **dadurch gekennzeichnet, dass** der zylindrische Abschnitt (230) mit vier ringförmigen Wülsten (232) versehen ist.

3. Anschlussstück (100, 100') nach einem der Ansprüche 1 oder 2, **dadurch gekennzeichnet, dass** die Länge des zylindrischen und glatten Lagers (330) gleich oder etwas größer wie diejenige des zylindrischen Abschnittes (230) ist.

4. Anschlussstück (100, 100') nach einem der Ansprüche 1 bis 3, **dadurch gekennzeichnet, dass** die Außenwand der Muffe (300) mit einem Betätigungsmittel (310) versehen ist, welches das Verschrauben oder das Losschrauben der Muffe (300) auf dem Körper (200, 200') zulässt.

5. Anschlussstück (100, 100') nach Anspruch 4, **dadurch gekennzeichnet, dass** das Antriebsmittel aus einem Abschnitt mit hexagonalem Querschnitt (310) besteht, der dazu geeignet ist, mit einem handelsüblichen Gabelschlüssel zusammenzuwirken.

6. Anschlussstück (100) nach einem der Ansprüche 1 bis 5, **dadurch gekennzeichnet, dass** der Körper (200) mit einem Anschlussmittel (210) auf einem Zubehör (A) versehen ist.

7. Anschlussstück (100) nach Anspruch 6, **dadurch gekennzeichnet, dass** das Anschlussmittel (210) einen Flansch (214) umfasst, der das Gewinde (220) in gleicher Weise verlängert wie ein anderes Gewinde (212), den Flansch (214) verlängert, wobei der Flansch (214) dergestalt dimensioniert ist, dass er eine Hartlötung (B) zur Verbindung mit der Wand des Zubehörs (A) aufnehmen kann.

8. Anschlussstück (100') nach einem der Ansprüche 1 bis 5, **dadurch gekennzeichnet, dass** der Körper (200') mit einem Anschlussmittel (210') für einen anderen Schlauch (T') versehen ist, wobei das Anschlussmittel (210') ein Ansatz (214') umfasst, der das Gewinde (220) verlängert, wobei der Ansatz (214') durch ein zweites Gewinde (220') verlängert ist, welches durch einen zweiten zylindrischen Abschnitt (230') verlängert ist, um den ringförmige Wülste (232') angeordnet sind, wobei eine zweite Muffe (300) mit dem zweiten Gewinde (220') zusammenwirkt, um die Wand des Endes des anderen Schlauches (T') zwischen dem zylindrischen glatten Lager (330) und den ringförmigen Wülsten (232') zu halten. Translator's note: The latters "D8" after claim 5 do not make sense. In claim 8, line 9, it should probably read "d'autre tuyau (T'), since "un autre tuyau (T') has already been cited in line 4/5 of the same claim. Please check.

## Claims

1. Connector (100; 100') for the connection of flexible hoses, comprising a body (200, 200') provided with a screw thread (220) extended by a cylindrical portion (230) adapted to be introduced into one end of a hose (T), a sleeve (300) provided with a tapped thread (320) intended to cooperate with the screw thread (220), the sleeve (300) being provided with a smooth cylindrical recess (330) arranged in the extension to the tapped thread (320), annular beads (232) being arranged around the cylindrical portion (230) and being adapted to clamp the wall of the end of the hose (T) against the smooth cylindrical recess (330) in order to retain it in the connector (100, 100') while forming a seal between said hose and the body (200, 200') at the completion of the mounting of the sleeve (300) on the body (200, 200'), each annular bead (232) having a semi-circular radial section, **characterised in that** the beads (232) are spaced at regular intervals in order to delimit a minimum distance between two adjacent beads so as to ensure good resistance to pulling out of the hose (T).

2. Connector (100, 100') according to claim 1, **characterised in that** the cylindrical portion (230) is provided with four annular beads (232).

3. Connector (100, 100') according to any one of claims 1 or 2, **characterised in that** the length of the smooth cylindrical recess (330) is equal to or slightly greater than that of the cylindrical portion (230).

4. Connector (100, 100') according to any one of claims 1 to 3, **characterised in that** the outer wall of the sleeve (300) is provided with drive means (310) enabling the sleeve (300) to be screwed onto or unscrewed from the body (200, 200').

5. Connector (100, 100') according to claim 4, **characterised in that** the drive means consists of a portion of hexagonal section (310) adapted to cooperate with a commercially available flat spanner.

6. Connector (100) according to any one of claims 1 to 5, **characterised in that** the body (200) is provided with connecting means (210) for connection to an accessory (A).

7. Connector (100) according to claim 6, **characterised in that** the connecting means (210) comprises a flange (214) extending the screw thread (220) and another screw thread (212) extending said flange (214), the flange (214) being of such dimensions as to receive a brazed joint (B) for connection to the wall of the accessory (A).

8. Connector (100') according to any one of claims 1 to 5, **characterised in that** the body (200') is provided with connecting means (210') for connecting another hose (T'), the connecting means (210') comprising a shoulder (214') extending the screw thread (220), the shoulder (214') being extended by a second screw thread (220') which is extended by a second cylindrical portion (230') around which annular beads (232') are disposed, a second sleeve (300) cooperating with the second screw thread (220') to hold the wall of the end of another flexible hose (T') between the smooth cylindrical recess (330) and the annular beads (232').
